# EUROPEAN PATENT APPLICATION

(11) **EP 2 927 809 A1**
(43) Date of publication of application: **07.10.2015**
(21) Application number: 15161780.0
(22) Date of filing: 30.03.2015
(51) Int. Cl.: G06F 9/445, G06Q 10/10

(54) **AUTOMATIC DETECTION AND LOADING OF MISSING PLUG-INS IN A MEDIA COMPOSITION APPLICATION**

(30) Priority: 04.04.2014 US 201461975132 P; 15.05.2014 US 201414278609
(71) Applicant: Avid Technology, Inc., Burlington, MA 01803 (US)
(72) Inventor: Brown, Jr., Robert, Sunnyvale, CA California 94085 (US); Venkatesan, Bharathidasan, Fremont, CA California 94536 (US)
(74) Representative: Cole, Douglas Lloyd

(57) **Abstract**

When collaborators working on a media composition project share portions of a composition that involve the use of plug-ins, the collaborator receiving the shared portion requires a local copy of the plug-ins in order to play or edit the shared portion. If a plug-in is missing, the receiving system automatically notifies the receiving collaborator of the missing plug-in, and enables the receiver to purchase or rent it from a marketplace made available within the receiver's media composition application, and to download, install, load, and run the missing application without restarting the composition application. The same process may be used when a plug-in on the receiving system needs to be updated before it is able to process the shared portion. This streamlines collaboration in distributed media composition workflows.

## Description

### BACKGROUND

The media compositional process commonly involves the use of software plug-ins that augment the functionality of a media composition application, such a digital audio workstation or a non-linear video editor. In order to be able to play or edit media for which a plug-in was used, a system needs to have its own copy of the plug-in installed locally. As media composition becomes increasingly collaborative, with projects being split up among multiple editors, media that involve the use of plug-ins are commonly shared among collaborators. When a first collaborator uses a plug-in to create a portion of a composition and wishes to share it with a second collaborator, the second collaborator needs to have that plug-in installed on their machine in order to be able to view and/or edit the shared portion. If the second user lacks the plug-in and wishes to work with the shared portion, the plug-in must be purchased or rented. There is a need to make this process less cumbersome for the second collaborator so as to streamline collaborative workflows.

### SUMMARY

In general, the methods, systems, and computer program products described herein enable automatic detection, purchasing or renting, downloading, installing, and running of missing plug-ins or plug-in updates from within a media composition application without restarting the application.

In general, in one aspect, a method comprises: at a client system running a media composition application, receiving a track of a media composition, wherein the track includes media requiring processing by a plug-in that is missing from the client system; alerting a user of the client system that the required plug-in is missing; enabling the user to acquire the missing plug-in from within the media composition application; if the user acquires the missing plug-in, automatically downloading, installing, and running the missing plug-in without requiring a restart of the media composition application; and enabling the user to process the media requiring the plug-in.

Various embodiments include one or more of the following features. The media composition application is a digital audio workstation and the media requiring processing is audio data. The plug-in creates an audio effect when it processes the audio data. The media composition application is a non-linear video editing application and the media requiring processing is video data. The plug-in creates a video effect when it processes the video data. Metadata packaged with the received track specifies one or more plug-ins that are required to process the track. The track of the media composition is received from a server, and the server is able to determine that a plug-in required by media included in the received track is missing from the media composition application, and the media composition system on the client alerts the user that the required plug-in is missing after receiving a notification of the missing plug-in from the server. The received track is stored on the client system in a frozen state, and the alerting step is performed when the received track is unfrozen. Processing the media requiring the plug-in includes playing back and/or editing the media using the media composition application. Acquiring the missing plug-in involves providing an interface within the media composition application that enables a user to rent or purchase the missing plug-in from a remote server, and enabling the user to perform an ecommerce transaction to complete the rental or purchase.

In general, in another aspect, a method comprises: at a client system running a media composition application, receiving a track of a media composition, wherein the track includes media requiring processing by a plug-in; determining that the client system includes a version of the plug-in that requires updating before the media can be processed by the plug-in; alerting a user of the client system that the required plug-in needs to be updated; enabling the user to purchase or rent an updated version of the plug-in from within the media composition application; if the user purchases or rents the updated version of the plug-in, automatically downloading, installing, and running the updated version of the plug-in without requiring a restart of the media composition application; and enabling the user to process the media requiring the plug-in.

In various embodiments the received track is stored on the client system in a frozen state, and the alerting step is performed when the received track is unfrozen.

In general, in another aspect, at a client system running a media composition application, receiving a track of a media composition, wherein the track includes media requiring processing by a plug-in that is missing from the client system; automatically identifying the plug-in that is missing on the client system; automatically downloading, installing, and running the missing plug-in without requiring a restart of the media composition application; and enabling the user to process the media requiring the plug-in that was missing.

In various embodiments, prior to the downloading, installing, and running steps, alerting a user of the client system that the required plug-in is missing,and from within the media composition application, enabling the user to authorize the client system to download, install, and run the missing plug-in. The version of the missing plug-in requires updating, and the updated plug-in required is automatically identified, downloaded, installed, and run without requiring a restart of the media composition application. The user's permission to update the plug-in for which a new version is needed is sought before the download, installation, and running steps are performed.

### BRIEF DESCRIPTION OF THE DRAWINGS

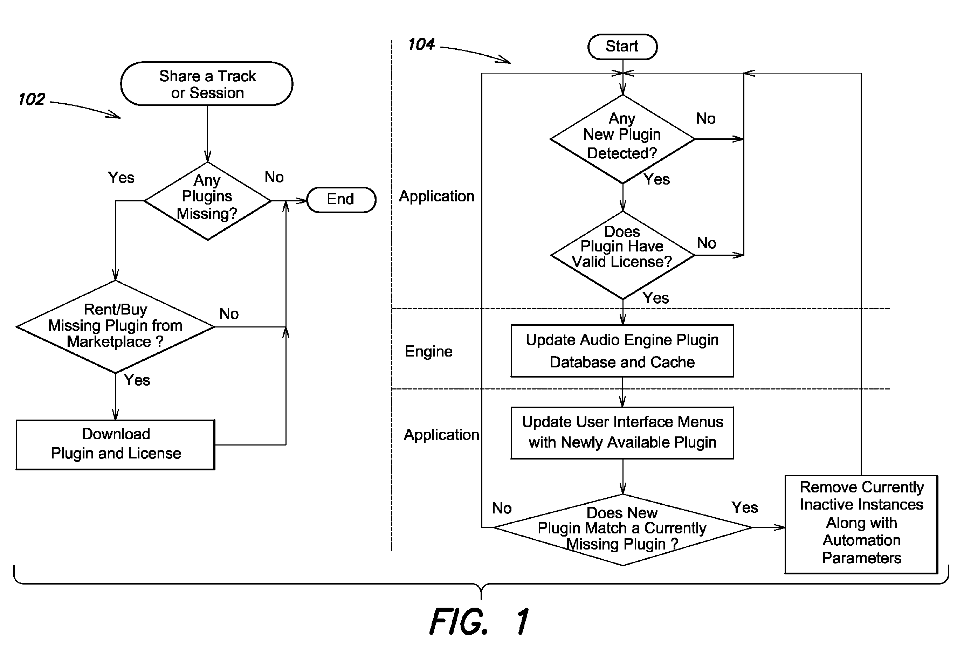

Figure 1 is a high level flow diagram showing processes involved in detecting and acquiring missing plug-ins, and for enabling a media composition tool to run the plug-in.

### DETAILED DESCRIPTION

Collaborators creating media projects with computer-based media composition tools, typically use their own client workstations. While each collaborator may be running the same version of a media composition application on their client, they may not have the same set of software plug-ins. Such plug-ins form an integral part of the compositional environment, as users commonly wish to enhance the features provided by the base composition application by adding functionality provided by plug-ins. In particular, many audio and video effects and graphics are commonly implemented using plug-ins. Thus a common situation arises when a first collaborator wishes to share a portion of a media composition with a second collaborator, and the portion was created with, and relies upon, a particular plug-in that the second collaborator does not have on their client.

In current workflows, when this situation arises, the second collaborator has to identify which plug-in is missing, and then needs to start a separate process to purchase or rent the missing plug-in. This may involve opening a browser, navigating to a site offering the plug-in for sale or rental, performing an e-commerce transaction, then downloading and installing the plug-in. The hosting media composition application then has to be restarted before the plug-in becomes operational. These steps slow down the workflow.

In the methods described herein, when a track shared by another collaborator is received, the user's media composition application automatically detects that a plug-in is missing, identifies which one it is, and directs the user to a marketplace available within the application offering the missing plug-in. After authorizing purchase or rental of the plug-in, the application automatically performs the download, and the plug-in is ready for use without restarting the application.

In workflows in which a first collaborator shares a track with a second collaborator via a server, the detection of the plug-ins installed on the receiving collaborator's system may be performed by the server, which also checks whether a specific plug-in used on the shared track is present on the receiving system. If a missing plug-in is detected, metadata describing the missing plug-in is pushed to the receiving system, causing the application to alert the user of the missing plugin, and offer an in-application opportunity to purchase or rent it. If the user authorizes purchase or rental, the plug-in software itself is pushed to the receiving system, where it is installed automatically. In this manner, the identification of the missing plug-in and the acquisition of the plug-in become an integral part of the process of sharing the track itself. In some cases, the plug-in may not need to be rented or purchased, but may be freely available. In this situation, the user may just need to give permission for the plug-in to be downloaded, without the need to engage in an e-commerce transaction. Depending on the security settings on the user's system, even this step may not be required, and the missing plug-in may be downloaded and installed without any user intervention.

In another workflow, an editor may wish to edit a track that may have been received from a collaborator previously, but which the editor has only used for playback purposes. Such a track may be in its native form, or it may be "frozen." In a frozen track, the track metadata and media data has been rendered to another media file, and the original track and media data is not accessed when the track is played back. When the track is unfrozen, the rendered media file is discarded, and it reverts to the original track and media data. Whether previously frozen or not, in order to work with the previously received track, the plug-ins used to create the track are needed. If one or more plug-ins are missing, the user is alerted, and the steps for acquiring and running the missing one or more plug-ins are performed as described above.

Figure 1 illustrates a process for implementing the steps described above. The two illustrated loops run simultaneously on the receiving system. Loop 102 is responsible for detecting that a plug-in is missing, prompting the user to buy or rent the plug-in, and then downloading the plug-in and a valid license. Loop 104 serves to detect the presence of a new downloaded plug-in that needs to be installed. If a new plug-in is detected, it checks the license, enabling it to reject an unauthorized download. If the license check succeeds, the application's internal structures are updated in order to accommodate the new plug-in.

In the described embodiment, the following steps take place. When a track is shared with a collaborator, the receiving system receives metadata associated with the track, one of which specifies the plug-ins currently used on the track. The compositional application on the receiving system then attempts to instantiate the plug-ins; missing plug-ins cause a particular error code to be issued. This causes the application to prompt the user to download the missing plug-in from a marketplace made available within the application. If the purchase/rent transaction is authorized, a license is copied to the appropriate location, the download takes place, and the plug-in is loaded into a plug-in database maintained by the application. The consistency of the existing database is maintained while the new plug-in is loaded. The application then refreshes its internal plug-in database, the compositional application updates currently inactive plug-in instances with the newly loaded instances, and all the inactive plug-ins become available without any user interaction.

The media composition application may be a non-linear video editing system for editing video data. An example of such a system is Media Composer® from Avid® Technology, Inc., of Burlington, Massachusetts, which is described in part in U.S. Patent Nos. 5,267,351, 5,355,450, and 5,930,445, which are incorporated herein by reference. The media composition system may also comprise a digital audio workstation for editing audio data. An example of such a system is Pro Tools®, also from Avid Technology, Inc. Digital audio workstations are well known by practitioners of audio composition. The term is typically used to refer to an audio editing software application that includes capabilities such as recording, track mixing, non-linear track editing, the ability to add and edit metadata, routing of processing to plug-ins, automation, and application of many processing functions, such as equalization, filtering, compression, reverb, pitch shifting, time stretching, and 3D audio effects.

The various components of processes described herein may be implemented as a computer program using a general-purpose computer system. Such a computer system typically includes a main unit connected to both an output device that displays information to a user and an input device that receives input from a user. The main unit generally includes a processor connected to a memory system via an interconnection mechanism. The input device and output device also are connected to the processor and memory system via the interconnection mechanism.

One or more output devices may be connected to the computer system. Example output devices include, but are not limited to, liquid crystal displays (LCD), plasma displays, various stereoscopic displays including displays requiring viewer glasses and glasses-free displays, cathode ray tubes, video projection systems and other video output devices, printers, devices for communicating over a low or high bandwidth network, including network interface devices, cable modems, and storage devices such as disk or tape. One or more input devices may be connected to the computer system. Example input devices include, but are not limited to, a keyboard, keypad, track ball, mouse, pen and tablet, touchscreen, camera, communication device, and data input devices. The invention is not limited to the particular input or output devices used in combination with the computer system or to those described herein.

The computer system may be a general purpose computer system, which is programmable using a computer programming language, a scripting language or even assembly language. The computer system may also be specially programmed, special purpose hardware. In a general-purpose computer system, the processor is typically a commercially available processor. The general-purpose computer also typically has an operating system, which controls the execution of other computer programs and provides scheduling, debugging, input/output control, accounting, compilation, storage assignment, data management and memory management, and communication control and related services. The computer system may be connected to a local network and/or to a wide area network, such as the Internet. The connected network may transfer to and from the computer system program instructions for execution on the computer, media data such as video data, still image data, or audio data, metadata, review and approval information for a media composition, media annotations, and other data.

A memory system typically includes a computer readable medium. The medium may be volatile or nonvolatile, writeable or nonwriteable, and/or rewriteable or not rewriteable. A memory system typically stores data in binary form. Such data may define an application program to be executed by the microprocessor, or information stored on the disk to be processed by the application program. The invention is not limited to a particular memory system. Time-based media may be stored on and input from magnetic, optical, or solid state drives, which may include an array of local or network attached disks.

A system such as described herein may be implemented in software, hardware, firmware, or a combination of the three. The various elements of the system, either individually or in combination may be implemented as one or more computer program products in which computer program instructions are stored on a computer readable medium for execution by a computer, or transferred to a computer system via a connected local area or wide area network. Various steps of a process may be performed by a computer executing such computer program instructions. The computer system may be a multiprocessor computer system or may include multiple computers connected over a computer network. The components described herein may be separate modules of a computer program, or may be separate computer programs, which may be operable on separate computers. The data produced by these components may be stored in a memory system or transmitted between computer systems by means of various communication media such as carrier signals.

In embodiments of the disclosed invention, when collaborators working on a media composition project share portions of a composition that involve the use of plug-ins, the collaborator receiving the shared portion may require a local copy of the plug-ins in order to play or edit the shared portion. If a plug-in is missing, the receiving system automatically notifies the receiving collaborator of the missing plug-in, and enables the receiver to purchase or rent it from a marketplace made available within the receiver's media composition application, and to download, install, load, and run the missing application without restarting the composition application. The same process may be used when a plug-in on the receiving system needs to be updated before it is able to process the shared portion. This streamlines collaboration in distributed media composition workflows.

Having now described an example embodiment, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention.

## Claims

1. A method comprising:
at a client system running a media composition application, receiving a track of a media composition, wherein the track includes media requiring processing by a plug-in that is missing from the client system;
alerting a user of the client system that the required plug-in is missing;
enabling the user to acquire the missing plug-in from within the media composition application;
if the user acquires the missing plug-in, automatically downloading, installing, and running the missing plug-in without requiring a restart of the media composition application; and
enabling the user to process the media requiring processing by the plug-in.

2. The method of claim 1, wherein the media composition application is a digital audio workstation and the media requiring processing is audio data.

3. The method of claim 2, wherein the plug-in creates an audio effect when it processes the audio data.

4. The method of claim 1, wherein the media composition application is a non-linear video editing application and the media requiring processing is video data.

5. The method of claim 4, wherein the plug-in creates a video effect when it processes the video data.

6. The method of any of the preceding claims, wherein metadata packaged with the received track specifies one or more plug-ins that are required to process the track.

7. The method of claim 6, wherein the track of the media composition is received from a server, and the server is able to determine that a plug-in required by media included in the received track is missing from the media composition application, and wherein the media composition system on the client alerts the user that the required plug-in is missing after receiving a notification of the missing plug-in from the server.

8. The method of any of the preceding claims, wherein the received track is stored on the client system in a frozen state, and wherein the alerting step is performed when the received track is unfrozen.

9. The method of any of the preceding claims, wherein processing the media requiring the plug-in includes playing back the media and/or editing the media using the media composition application.

10. The method of any of the preceding claims, wherein acquiring the missing plug-in includes:
presenting the user with an interface for renting or purchasing the missing plug-in from a remote server; and
enabling the user to perform an ecommerce transaction to rent or purchase the missing plug-in.

11. A method comprising:
at a client system running a media composition application, receiving a track of a media composition, wherein the track includes media requiring processing by a plug-in;
determining that the client system includes a version of the plug-in that requires updating before the media can be processed by the plug-in;
alerting a user of the client system that the required plug-in needs to be updated;
via an interface provided by the media composition application, enabling the user to acquire an updated version of the plug-in;
if the user acquires the updated version of the plug-in, automatically downloading, installing, and running the updated version of the plug-in without requiring a restart of the media composition application; and
enabling the user to process the media requiring processing by the plug-in.

12. The method of claim 11, wherein the received track is stored on the client system in a frozen state, and wherein the alerting step is performed when the received track is unfrozen.

13. The method of claim 11 or 12, wherein acquiring the updated version of the plug-in includes:
presenting the user with an interface for renting or purchasing the updated version of the plug-in from a remote server; and
enabling the user to perform an ecommerce transaction to rent or purchase the updated version of the plug-in.

14. A method comprising:
at a client system running a media composition application, receiving a track of a media composition, wherein the track includes media requiring processing by a plug-in that is missing from the client system;
automatically identifying the plug-in that is missing on the client system;
automatically downloading, installing, and running the missing plug-in without requiring a restart of the media composition application; and
enabling the user to process the media requiring processing by the plug-in that was missing.

15. The method of claim 14, further comprising:
prior to the downloading, installing, and running step:
alerting a user of the client system that the required plug-in is missing; and
from within the media composition application, enabling the user to authorize the client system to download, install, and run the missing plug-in.
